(19) Europäisches Patentamt
European Patent Office
Office européen des brevets

(11) Veröffentlichungsnummer: **0 043 347**
**A1**

(12) **EUROPÄISCHE PATENTANMELDUNG**

(21) Anmeldenummer: **81810258.4**

(22) Anmeldetag: **22.06.81**

(51) Int. Cl.³: **C 07 D 405/14**
C 08 K 5/34, C 08 G 59/26
C 08 G 59/30

(30) Priorität: **26.06.80 CH 4915/80**

(43) Veröffentlichungstag der Anmeldung:
**06.01.82 Patentblatt 82/1**

(84) Benannte Vertragsstaaten:
**CH DE FR GB LI**

(71) Anmelder: **CIBA-GEIGY AG**
**Patentabteilung Postfach**
**CH-4002 Basel(CH)**

(72) Erfinder: **Buxbaum, Lothar, Dr.**
**Moosschmiedenweg**
**A-9500 Villach/Sankt Georgen(AT)**

(72) Erfinder: **Seiz, Wolfgang, Dr.**
**Alemannenweg 10**
**CH-4148 Pfeffingen(CH)**

(54) **Halogenhaltige Benzimidazolonbisglycide und ihre Verwendung.**

(57) Tri- oder Tetrahalogenbenzimidazolon-N,N'-bisglycide sind gute Flammschutzmittel, die einem Kunststoff einverleibt werden können oder als reaktive Flammschutzmittel an Polymere mit funktionellen Gruppen gebunden bzw. in die Polymerketten einpolymerisiert werden können. Ferner eignen sie sich in härtbaren Epoxidharzmischungen zur Herstellung flammwidriger Formkörper auf Epoxidharzbasis.

EP 0 043 347 A1

Croydon Printing Company Ltd.

Halogenhaltige Benzimidazolonbisglycide und ihre Verwendung

Die vorliegende Erfindung betrifft Tri- oder Tetrachlor- bzw. brombenzimidazolon-N,N'-bis-glycide, härtbare Mischungen mit diesen Verbindungen und ihre Verwendung als Flammschutzmittel in Kunststoffen.

Für verschiedene Anwendungszwecke ist es gewünscht, dass Kunststoffe flammwidrig ausgerüstet sind. Im allgemeinen erfolgt die flammwidrige Ausrüstung nach zwei Methoden. Entweder wird eine halogenhaltige organische Verbindung einem Kunststoff als Additiv einverleibt oder über funktionelle Gruppen in die Polymerketten eingebaut. Es besteht das Bedürfnis nach einem Flammschutzmittel, das nach beiden Methoden verwendet werden kann.

Aus der DE-OS 2 300 010 sind Monochlorbenzimidazolon-N,N'-bisglycid und seine Verwendung zur Herstellung von Epoxidharzen beschrieben. Der niedrige Chlorgehalt der Verbindung genügt jedoch nicht, um die Brennbarkeit von Kunststoffen wirkungsvoll zu vermindern.

Gegenstand der vorliegenden Erfindung ist ein halogenhaltiges Benzimidazolonbisglycid der Formel

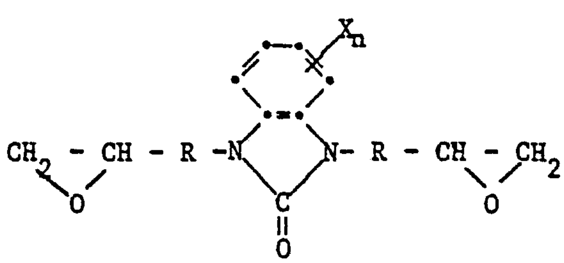

worin X für Chlor oder Brom steht, n die Zahlen 3 oder 4 bedeutet und

R Methylen oder die Gruppe $CH_2-CH_2-O-CH_2$ darstellt.

Bevorzugt ist in den erfindungsgemässen Bisglyciden n die Zahl 4, X steht bevorzugt für Brom und R bevorzugt für Methylen.

Beispiele sind: N,N'-Bis-(2-glycidyloxyäthyl)-4,5,6,7-tetrachlor- oder-tetrabrombenzimidazolon; N,N'-Bis-(2-glycidyloxyäthyl)-4,5,6-trichlor- oder-tribrombenzimidazolon; N,N'-Bis-(2-glycidyloxyäthyl)-4-chlor-5,6-dibrombenzimidazolon; N,N'-Bisglycidyl-4,5-dibrom-6-chlorbenzimidazolon. Besonders bevorzugt sind N,N'-Bisglycidyl-4,5,6,7-tetrachlor- oder-tetra-brombenzimidazolon.

Die erfindungsgemässen Bisglycide werden nach an sich bekannten Verfahren erhalten, wie sie z.B. in der DE-OS 2 300 010 beschrieben sind. Im allgemeinen werden hierzu entsprechend halogenierte Benzimidazolone oder 2-hydroxyäthylierte Benzimidazolone der Formel

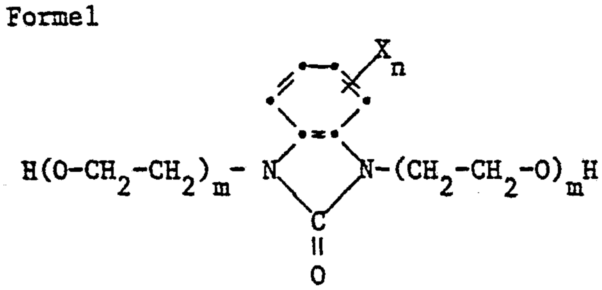

worin X und n die zuvor angegebene Bedeutung haben und m 0 oder 1 ist, mit Epichlorhydrin umgesetzt und anschliessend das Anlagerungsprodukt mittels starker Alkalien unter Bildung des Bisglycides dehydrohalogeniert.

Chlorierte und/oder bromierte Benzimidazolone sind bekannt und werden durch Halogenierung von Benzimidazolon nach üblichen Methoden erhalten. Halogenierte N,N-(2-Hydroxyäthyl)benzimidazolone sind z.B. in der DE-OS 2 453 326 beschrieben.

Die Umsetzung mit Epichlorhydrin kann mit oder ohne Lösungsmittel durchgeführt werden, wobei Epichlorhydrin selbst im Ueberschuss als Lösungsmittel dienen kann. Entstehendes Reaktionswasser wird zweckmässig azeotrop abdestilliert, gegebenenfalls im Vakuum. Es können auch Katalysatoren verwendet werden, wie z.B. quaternäre Ammoniumbasen. Die Reaktionstemperatur beträgt im allgemeinen von 50° bis 200°C.

Die Dehydrohalogenierung wird zweckmässig mit wässrigen Alkali- oder Erdalkalilaugen, wie Natriumhydroxid, durchgeführt, die bevorzugt portionsweise zugegeben werden.

Die erfindungsgemässen Bisglycide sind kristalline Verbindungen mit relativ hohen Schmelzpunkten und hoher thermischer Beständigkeit. Sie lassen sich einfach in Kunststoffe einarbeiten und sie eignen sich daher hervorragend als Flammschutzmittel für duroplastische und thermoplastische Polymere, wobei oft schon mit geringen Zusatzmengen selbstverlöschende Einstellungen möglich sind. Man kann die erfindungsgemässen Bisglycide als Flammschutzadditive einem Polymer einverleiben, wobei die Glycidgruppen mit funktionellen Gruppen wie Hydroxyl-, Carboxy- oder Säureamidgruppen in einem Polymere reagieren können, was insofern vorteilhaft ist, als die Migrationsbeständigkeit hierdurch erhöht wird. Die erfindungsgemässen Bisglycide können mit Epoxidhärtern in Epoxidharze überführt werden oder sie können, gegebenenfalls nach Umwandlung der Glycidgruppen in 1,2-Diolgruppen, in Polymere einpolymerisiert werden, besonders zusammen mit anderen Polyepoxidverbindungen.

Ein weiterer Gegenstand vorliegender Erfindung ist daher eine flammwidrig ausgerüstete Formmasse, die einen duroplastischen oder thermoplastischen Kunststoff und ein Flammschutzmittel enthält, die dadurch gekennzeichnet ist, dass sie als Flammschutzmittel eine wirksame Menge eines erfindungsgemässen halogenhaltigen Benzimidazolonbisglycides enthält.

Im allgemeinen werden Mengen von 0,5 bis 30 Gew.%, vorzugsweise 1 bis 15 Gew.% des Flammschutzmittels dem Polymer einverleibt, bezogen auf das Polymer.

Als Kunststoffe kommen sowohl Duroplaste und Thermoplaste in Frage. Die thermoplastischen Kunststoffe und Epoxidharze sind bevorzugt.

Beispiele sind:

1. Polymere, die sich von einfach oder doppelt ungesättigten Kohlenwasserstoffen ableiten, wie Polyolefine, wie z.B. Polyäthylen, das gegebenenfalls vernetzt sein kann, Polypropylen, Polyisobutylen, Polymethylbuten-1, Polymethylpenten-1, Polybuten-1, Polyisopren, Polybutadien, Polystyrol, Polyisobutylen, Copolymere der den genannten Homopolymeren zugrundeliegenden Monomeren, wie Aethylen-Propylen-Copolymere, Propylen-Buten-1-Copolymere, Propylen-Isobutylen-Copolymere, sowie Terpolymere von Aethylen und Propylen mit einem Dien, wie z.B. Hexadien, Dicyclopentadien oder Aethylidennorbornen; Mischungen der oben genannten Homopolymeren, wie beispielsweise Gemische von Polypropylen und Polyäthylen, Polypropylen und Poly-Buten-1, Polypropylen und Polyisobutylen.

2. Halogenhaltige Vinylpolymere, wie Polyvinylchlorid, Polyvinylidenchlorid, Polyvinylfluorid, aber auch Polychloropren und Chlorkautschuke.

3. Polymere, die sich von α,β-ungesättigten Säuren und deren Derivaten ableiten, wie Polyacrylate und Polymethacrylate, Polyacrylamide und Polyacrylnitril, sowie deren Copolymeren mit anderen Vinylverbindungen, wie Acrylnitril/Butadien/Styrol, Acrylnitril/Styrol und Acrylnitril/Styrol/Acrylester-Copolymerisate.

4. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin und deren Copolymere mit anderen Vinylverbindungen, wie Aethylen/Vinylacetat-Copolymere.

5. Homo- und Copolymere, die sich von Epoxyden ableiten, wie Polyäthylenoxid oder die Polymerisate, die sich von Polyepoxidverbindungen ableiten.

6. Polyacetale, wie Polyoxymethylen und Polyoxyäthylen, sowie solche Polyoxymethylene, die als Comonomeres Aethylenoxid enthalten.

7. Polyphenylenoxyde.

8. Polyurethane und Polyharnstoffe.

9. Polycarbonate.

10. Polysulfone.

11. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12, ist eine bevorzugte Gruppe von Kunststoffen.

12. Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

13. Alkydharze, wie Glycerin-Phthalsäure-Harze und deren Gemische mit Melamin-Formaldehydharzen.

14. Ungesättigte Polyesterharze, die sich von Copolyestern gesättigter und ungesättigter Dicarbonsäuren mit mehrwertigen Alkoholen, sowie Vinylverbindungen als Vernetzungsmitteln ableiten.

15. Natürliche Polymere, wie Cellulose, Gummi, sowie deren polymerhomolog chemisch abgewandelte Derivate, wie Celluloseacetate, -propionate und -butyrate, bzw. die Celluloseäther, wie Methylcellulose.

16. Thermoplastische Polyester auf der Basis aliphatischer, cycloaliphatischer und/oder aromatischer Dicarbonsäuren und aliphatischer, cycloaliphatischer und/oder aromatischer Diole.

Als technisch wichtige Gruppe von Polyestern werden besonders jene angesehen, die mindestens 25 Mol%, vorzugsweise 40 Mol%, Terephthalsäurereste, und mindestens 25 Mol%, vorzugsweise 40 Mol%, Alkylendiolreste enthalten, bezogen auf den Polyester. Die linearen oder verzweigten Alkylendiolreste können 2 bis 12, vorzugsweise 2 bis 6 C-Atome enthalten und sind besonders Aethylen- oder 1,4-Butylenglykolreste. Weitere für die Polyesterherstellung bekannte Monomere sowie Polyester sind z.B. in der deutschen Offenlegungsschrift 27 51 969 beschrieben.

Die Einarbeitung der Zusätze kann beispielsweise durch Einmischen der Einzelzusätze gemeinsam oder einzeln und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen. Die Zusätze können auch vor oder während der Polymerisation zugegeben werden. Höhere Mengen werden vorteilhaft durch Umgranulieren in einem Extruder eingearbeitet.

Als Beispiele weiterer Additive und inerter Zusätze, mit denen zusammen das Flammschutzmittel eingesetzt werden kann, sind Antioxidantien, UV-Stabilisatoren oder andere Lichtschutzmittel, Weichmacher, Fliessmittel, Entformungshilfsmittel, Kristallkeimbildungsmittel, optische Aufheller, Mattierungsmittel, Farbstoffe und Pigmente, inerte oder verstärkende Füllstoffe wie Russ, Talk, Kaolin, Metallpulver, Wollastonit, Glaskugeln oder -pulver, Quarzmehl, Asbest- oder Glasfasern, Dispergierhilfsmittel. Ferner können Verbindungen der Elemente der fünften Hauptgruppe des Periodensystems wie Phosphorverbindungen und besonders Antimonverbindungen, z.B. Antimontrioxid, mitverwendet werden, die die flammhemmende Wirkung synergistisch verbessern.

Die erfindungsgemässen Formmassen eignen sich zur Herstellung von flammwidrigen Formteilen aller Art.

Die erfindungsgemässen Bisglycide eignen sich auch als solche alleine oder zusammen mit anderen Polyepoxidverbindungen mit durchschnittlich mehr als einer Epoxidgruppe im Molekül und Härtern zur Herstellung von flammwidrigen Formkörpern aus Epoxidharzen, die sich durch eine gute Wärmeformbeständigkeit und besonders durch hohe Glasumwandlungstemperaturen auszeichnen.

Ein weiterer Gegenstand vorliegender Erfindung ist auch ein härtbares Gemisch, aus dem durch Härtung in der Wärme flammwidrig ausgerüstete Formkörper herstellbar sind, die Polyepoxidverbindungen mit durchschnittlich mehr als einer Epoxidgruppe im Molekül, einem Härter und gegebenenfalls übliche Zusätze enthalten, und das dadurch gekennzeichnet ist, dass ein erfindungsgemässes halogeniertes Benzimidazolonbisglycid alleine oder als Cokomponente mit anderen Polyepoxidverbindungen enthalten ist.

Als Polyepoxidverbindungen kommen für die erfindungsgemässen härtbaren Gemische vor allem solche mit durchschnittlich mehr als einer an ein Heteroatom (z.B. Schwefel, vorzugsweise Sauerstoff oder Stickstoff) gebundenen Glycidylgruppe, β-Methylglycidylgruppe oder 2,3-Epoxycyclopentylgruppe in Frage; genannt seien insbesondere Bis-(2,3-epoxycyclopentyl)äther; Di- bzw. Polyglydicyläther von mehrwertigen aliphatischen Alkoholen, wie 1,4-Butandiol, oder Polyalkylenglykolen, wie Polypropylenglykole; Di- oder Polyglycidyläther von cycloaliphatischen Polyolen, wie 2,2-Bis-(4-hydroxycyclohexyl)-propan; Di- bzw. Polyglycidyläther von mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5'-dibromphenyl)-propan, 1,1,2,2-Tetrakis-(p-hydroxylphenyl)-äthan, oder von unter sauren Bedingungen erhaltenen Kondensationsprodukten von Phenolen mit Formaldehyd wie Phenol-Novolake und Kresol-Novolake; Di- bzw. Poly-(β-methylglycidyl)-äther der oben angeführten mehrwertigen Alkohole oder mehrwertigen Phenole; Polyglycidylester von mehrwertigen Carbonsäuren, wie Phthalsäure, Terephthalsäure, $\Delta^4$-Tetrahydrophthalsäure und Hexahydrophthalsäure; N-Glycidylderivate von Aminen, Amiden und heterocyclischen Stickstoffbasen, wie N,N-Diglycidylanilin, N,N-Diglycidyltoluidin, N,N,N',N'-Tetraglycidyl-bis-(p-aminophenyl)-methan; Triglycidyl-isocyanurat; N,N'-Diglycidyläthylenharnstoff; N,N'-Diglycidyl-5,5-dimethylhydantoin, N,N'-Diglycidyl-5-isopropyl-hydantoin; N,N'-Diglycidyl-5,5-dimethyl-6-isopropyl-5,6-dihydro-uracil.

Gewünschtenfalls kann man den Polyepoxiden zur Herabsetzung der Viskosität aktive Verdünner, wie z.B. Styroloxid, Butylglycidyläther, Isooctylglycidyläther, Phenylglycidyläther, Kresylglycidyläther, Glycidylester von synthetischen, hochverzweigten, in der Hauptsache tertiären aliphatischen Monocarbonsäuren ("CARDURA E") zusetzen.

Als Härter kommen saure oder basische Verbindungen in Frage. Als geeignete Härter seien z.B. genannt: Amine oder Amide, wie aliphatische, cycloaliphatische oder aromatische, primäre, sekundäre und tertiäre Amine, z.B. Monoäthanolamin, Aethylendiamin, Hexamethylendiamin, Trimethylhexamethylendiamin, Diäthylentriamin, Triäthylentetramin, Tetraäthylenpentamin, N,N-Dimethylpropylendiamin-1,3, N,N-Diäthylpropylendiamin-1,3, 2,2-Bis(4'-aminocyclohexyl)propan, 3,5,5-Trimethyl-3-(aminomethyl)-cyclohexylamin ("Isophorondiamin"), Mannichbasen, wie 2,4,6-Tris(dimethylaminomethyl)-phenol; m-Phenylendiamin, p-Phenylendiamin, Bis(4-aminophenyl)methan, Bis(4-aminophenyl)sulfon, m-Xylylendiamin; Addukte von Acrylnitril oder Monoepoxiden, wie Aethylenoxid oder Propylenoxid, an Polyalkylenpolyamine, wie Diäthylentriamin oder Triäthylentetramin; Addukte aus Polyaminen, wie Diäthylentriamin oder Triäthylentetramin, im Ueberschuss und Polyepoxiden, wie Diomethan-polyglycidyläthern; Ketimine, z.B. aus Aceton oder Methyläthylketon und Bis(p-aminophenyl)-methan; Addukte aus Monophenolen oder Polyphenolen und Polyaminen; Polyamide, insbesondere solche aus aliphatischen Polyaminen, wie Diäthylentriamin oder Triäthylentetramin, und di- oder trimerisierten ungesättigten Fettsäuren, wie dimerisierte Leinölfettsäure (VERSAMID); polymere Polysulfide (THIOKOL); Dicyandiamid, Anilin-Formaldehydharze; mehrwertige Phenole, z.B. Resorcin, 2,2-Bis(4-hydroxyphenyl)-propan oder Phenol-Formaldehyd-Harze; Bortrifluorid und seine Komplexe mit organischen Verbindungen, wie $BF_3$-Aether-Komplexe und $BF_3$-Amin-Komplexe, z.B. $BF_3$-Monoäthylamin-Komplex; Acetoacetanilid-$BF_3$-Komplex; Phosphorsäure; Triphenylphosphit; mehrbasische Carbonsäuren und ihre Anhydride, z.B. Phthalsäureanhydrid, $\Delta^4$-Tetrahydrophthalsäureanhydrid, Hexahydrophthalsäureanhydrid, 4-Methylhexahydrophthalsäureanhydrid, 3,6-Endomethylen-$\Delta^4$-tetrahydrophthalsäureanhydrid, 4-Methyl-3,6-endomethylen-$\Delta^4$-tetrahydrophthalsäureanhydrid (= Methylnadicanhydrid), 3,4,5,6,7,7-Hexachlor-3,6-endomethylen-$\Delta^4$-tetrahydrophthalsäureanhydrid, Bernsteinsäureanhydrid, Adipinsäureanhydrid, Trimethyladipinsäureanhydrid, Azelainsäureanhydrid, Sebacinsäureanhydrid, Maleinsäureanhydrid, Dodecenylbernsteinsäureanhydrid; Pyromellitsäuredianhydrid oder Gemische solcher Anhydride.

Eine besonders bevorzugte Gruppe von Härtern sind die aromatischen Polyamine. Es wurde gefunden, dass diese gehärteten Gemische schon bei überraschend niedrigen Zusatzmengen eines erfindungsgemässen Bisglycides selbstverlöschende Eigenschaften aufweisen.

Die Härtung kann auch unter Verwendung von katalytischen Härtern durchgeführt werden, wobei im allgemeinen 0,1-30 Gew.%, bevorzugt 0,1 bis 15 Gew.%, eingesetzt werden, bezogen auf die Polyepoxidverbindungen. Geeignete katalytische Härter sind Dimethylaminoverbindungen wie N,N-Dimethyläthylendiamin, N,N-Dimethylpropylen-1,2- oder 1,3-diamin, N,N-Dimethyl-N,N'-di (γ-aminopropyl)-äthylen- oder propylendiamin.

Man kann bei der Härtung ausserdem Härtungsbeschleuniger einsetzen, z.B. 0,1-5Gew.% bezogen auf die Polyepoxidverbindungen, und zwar insbesondere bei der Verwendung von Polyamiden, Dicyandiamid, polymeren Polysulfiden oder Polycarbonsäureanhydriden als Härter; solche Beschleuniger sind z.B.: tertiäre Amine, deren Salze oder quaternäre Ammoniumverbindungen, z.B. 2,4,6-Tris(dimethylaminomethyl)phenol, Benzyldimethylamin, 2-Aethyl-4-methyl-imidazol, Triamylammoniumphenolat; oder Alkalimetallalkoholate, wie z.B. Natriumhexantriolat, Mono- oder Polyphenole wie Phenol oder Diomethan, Salicylsäure oder Salze der Rhodanwasserstoffsäure wie $NH_4SCN$.

Die Härter werden im allgemeinen in solchen Mengen eingesetzt, dass bei H-aktiven Verbindungen auf 0,5 bis 1,5, bevorzugt 0,8-1,2 Aequivalente aktive H-Atome des Härters 1 Aequivalent Epoxidgruppen in der härtbaren Mischung kommt.

Bei der Mitverwendung von Cokomponenten können z.B. bis zu 99 Gew.% des erfindungsgemässen Bisglycides durch andere Polyepoxidverbindungen ersetzt sein. Zur Erzielung einer ausreichenden Flammschutzwirkung enthalten die erfindungsgemässen härtbaren Mischungen bevorzugt 1 bis 50 Gew.%, besonders 1 bis 30 Gew.%, eines erfindungsgemässen halogenierten Benzimidazolonbisglycides und 99 bis 50 Gew.%, bevorzugt 99 bis 70 Gew.%, mindestens einer weiteren Polyepoxidverbindung.

Die Härtung der erfindungsgemässen härtbaren Mischungen zu Formkörpern und dergleichen erfolgt zweckmässig im Temperaturintervall von 20 bis 200°C. Man kann die Härtung in bekannter Weise auch zwei- oder mehrstufig durchführen, wobei die erste Härtungsstufe bei niedrigerer Temperatur und die Nachhärtung bei höherer Temperatur durchgeführt wird.

Die erfindungsgemässen härtbaren Mischungen können ferner vor der endgültigen Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen, Formtrennmitteln versetzt werden.

Als Streckmittel, Verstärkungsmittel, Füllmittel und Pigmente, die in den erfindungsgemässen härtbaren Mischungen eingesetzt werden können, seien z.B. genannt: Steinkohlenteer, Bitumen, flüssige Cumaron-Inden-Harze, Textilfasern, Glasfasern, Asbestfasern, Borfasern, Kohlenstoff-Fasern, Cellulose, Polyäthylenpulver, Polypropylenpulver; Quarzmehl; mineralische Silikate, wie Glimmer, Asbestmehl, Schiefermehl; Kaolin, Aluminiumoxidtrihydrat, Kreidemehl, Gips, Antimontrioxid, Bentone, Kieselsäureaerogel ("AEROSIL"), Lithopone, Schwerspat, Titandioxid, Russ, Graphit, Oxidfarben, wie Eisenoxid, oder Metallpulver, wie Aluminiumpulver oder Eisenpulver.

Als organische Lösungsmittel eignen sich für die Modifizierung der härtbaren Mischungen z.B. Toluol, Xylol, n-Propanol, Butylacetat, Aceton, Methyläthylketon, Diacetonalalkohol, Aethylenglykolmonomethyläther, -monoäthyläther und -monobutyläther.

Als Weichmacher können für die Modifizierung der härtbaren Mischungen z.B. Dibutyl-, Dioctyl- und Dinonylphthalat, Trikresylphosphat, Trixylenylphosphat, Diphenoxyäthylformal und Polypropylenglykole eingesetzt werden.

Als Verlaufmittel ("flow control agents") beim Einsatz der härtbaren Mischungen speziell im Oberflächenschutz, kann man z.B. Silicone, flüssige Acrylharze, Celluloseacetobutyrat, Polyvinylbutyral, Wachse, Stearate etc. (welche z.T. auch als Formtrennmittel Anwendung finden) zusetzen.

Speziell für die Anwendung auf dem Lackgebiet können ferner die Polyepoxidverbindungen in bekannter Weise mit Carbonsäuren, wie insbesondere höheren ungesättigten Fettsäuren, partiell verestert sein. Es ist ferner möglich, solchen Lackharzformulierungen andere härtbare Kunstharze, z.B. Phenoplaste oder Aminoplaste, zuzusetzen.

Die Herstellung der erfindungsgemässen härtbaren Mischungen kann in üblicher Weise mit Hilfe bekannter Mischaggregate (Rührer, Kneter, Walzen) erfolgen.

Die erfindungsgemässen härtbaren Mischungen finden ihren Einsatz vor allem auf den Gebieten des Oberflächenschutzes, der Elektrotechnik, der Laminierverfahren, der Klebstofftechnik und im Bauwesen. Sie können in jeweils dem speziellen Anwendungszweck angepasster Formulierung, im ungefüllten oder gefüllten Zustand, gegebenenfalls in Form von Lösungen oder Emulsionen, als Anstrichmittel, Lacke, Pressmassen, Spritzgussformulierungen, Tauchharze, Giessharze, Imprägnierharze, Bindemittel, als Werkzeugharze,

Laminierharze, Dichtungs- und Spachtelmassen, Bodenbelagsmassen und Bindemittel für mineralische Aggregate verwendet werden.

Bevorzugt werden die erfindungsgemässen Gemische als Laminierharze und Pressmassen eingesetzt.

Die nachfolgenden Beispiele erläutern die Erfindung näher.

A) Herstellung halogenierter Benzimidazolonbioglycide

Beispiel 1: Herstellung von N,N'-Diglycidyl-4,5,6,7-tetrabrombenzimidazolon

44,97 g Tetrabrombenzimidazolon, 370,12 g Epichlorhydrin und 0,66 g Tetramethylammoniumchlorid werden in einem Glaskolben mit Rührer, Rückflusskühler und Stickstoffeinleitung unter Rühren auf eine Temperatur von 140°C (Oelbad) erhitzt, wobei bei einer Innentemperatur von 104°C sich ein schwacher Rückfluss einstellt. Ueber einen Wasserabscheider wird entstehendes Wasser abgeschieden. Nach 2 1/2 Stunden wird ein Vakuum von 55 mbar angelegt und innerhalb von 30 Minuten 150 ml eines Azeotrops von Wasser und Epichlorhydrin abdestilliert. Diese Menge wird durch reines Epichlorhydrin wieder ersetzt. Die Innentemperatur während dieses Vorganges betrug 55°C.

Nach Zusatz von 8,8 g NaOH in wässriger Lösung innerhalb von 2 Stunden wird noch 15 Minuten nachreagieren gelassen und dann auf Zimmertemperatur abgekühlt. Nach Absaugen des ausgefallenen Niederschlages und nachfolgendem Auswaschen des Filterkuchens werden 37 g (67,3% d.Th.) von 1,3-Diglycidyl-4,5,6,7-tetrabrombenzimidazolon mit einem Epoxygehalt von 89% und einem Schmelzpunkt von 195-200°C gewonnen. Nach zweimaligem Umkristallisieren wird ein Produkt mit 100% Epoxygehalt und einem Schmelzpunkt von 206°C erhalten.

B) Anwendungsbeispiele

Anwendungsbeispiel 1: 10 g des entsprechend Beispiel 1 hergestellten 1,3-Diglycidyl-4,5,6,7-tetrabrombenzimidazolons werden in einem kleinen Becherglas aufgeschmolzen, 4,6 g Hexahydrophthalsäureanhydrid zugegeben, so lange gemischt, bis eine einheitliche Lösung erhalten wird und dann sofort auf zwei kleine Al-Schalen mit einem Durchmesser von 5 cm verteilt. Die Mischung in der ersten Schale wird während 6 Stunden bei 120°C gehärtet; es resultiert ein leicht opaker, gelber Formkörper mit einer thermoanalytisch bestimmten Glasumwandlungstemperatur von 148°C. Die Mischung in der zweiten Schale wird einer Härtung von 6 Stunden bei 180°C unterzogen. Der in diesem Fall erhaltene Formstoff ist ebenfalls gelb gefärbt aber transparent, die thermoanalytische Bestimmung der Glasumwandlungstemperatur ergibt den für ein anhydridgehärtetes Epoxidharz sehr hohen Wert von 222°C.

Beide Formstoffe entzünden sich zwar in einer Bunsenflamme, nach dem Entfernen der Zündflamme erlischt die Flamme jedoch augenblicklich (selbstlöschendes Verhalten).

Anwendungsbeispiel 2: 10 g 1,3-Diglycidyl-4,5,6,7-tetrabrombenzimidazolon wird in einer hochtourigen Schlagmühle zusammen mit 1,7 g Diaminodiphenylmethan homogen vermischt und fein vermahlen. Das so erhaltene feine Pulver wird in einer kleinen Al-Schale mit 5 cm Durchmesser in einen auf 180°C eingestellten Wärmeschrank gebracht, wo es zunächst zusammensintert und dann weitgehend aufgeschmolzen und während 6 Stunden bei 180°C gehärtet wird. Es resultiert ein grünlicher Formkörper mit einer thermoanalytisch bestimmten Glasumwandlungstemperatur von 237°C, der bei einem Flammtest ebenfalls selbstverlöschendes Verhalten zeigt.

Anwendungsbeispiel 3: In der folgenden Tabelle 1 sind die Eigenschaften von Formkörpern zusammengestellt, die aus einem flüssigen,

unmodifizierten Bisphenol-A-Epoxid, einem Zusatz des erfindungsgemässen 1,3-Diglycidyl-4,5,6,7-tetrabrombenzimidazolons und Diaminodiphenylmethan hergestellt werden. Bei der Herstellung der für die Bestimmung der Eigenschaften notwendigen Prüfkörper wird wie folgt vorgegangen:

Die in der Tabelle jeweils angegebene Menge an flüssigem, unmodifiziertem Bisphenol-A-Epoxid wird in einem Becherglas auf 140°C erwärmt, der Zusatz von 1,3-Diglycidyl-4,5,6,7-tetrabrombenzimidazolon darin gelöst und dann ohne weiteres Erwärmen die angegebene Menge an Diaminodiphenylmethan zugegeben. Nach kurzem, kräftigem Rühren entsteht eine homogene Lösung, die im Vakuum von der beim Mischen eingerührten Luft befreit und dann auf mit Trennmittel vorbehandelte Aluminiumformen zur Herstellung von Platten mit den Abmessungen 135 x 135 x 4 mm, Platten mit den Abmessungen 135 x 135 x 2 mm und kleine Al-Schalen mit einem Durchmesser von 5 cm verteilt werden. Nach einer Härtung von 4 Stunden bei 80°C + 8 Stunden bei 140°C kann ohne Schwierigkeiten entformt werden. Die 4 mm starken Formstoff-Platten dienen der Herstellung von Prüfkörpern mit den Abmessungen 60 x 10 x 4mm zur Prüfung von Biegefestigkeit und Durchbiegung nach VSM-Norm 77103, der Schlagbiegefestigkeit nach VSM-Norm 77105 und der Gewichtszunahme nach Wasserlagerung sowie von Prüfkörpern mit den Abmessungen 120 x 10 x 4 mm zur Bestimmung der Heat-Distortion nach ISO R 75 und der Brennbarkeit in Anlehnung an ASTM D 635 56 T. An den 2 mm starken Platten werden die dielektrischen Eigenschaften wie der Verlauf des Verlustfaktors tan $\delta$ in Funktion der Temperatur, die Dielektrizitätskonstante und der spez. Durchgangswiderstand bestimmt. Aus der in der Al-Schale gehärteten Formstoff-Scheibe wird das Material für die thermoanalytische Bestimmung der Glasumwandlungstemperatur entnommen.

Ein kleiner Anteil der Harz-Härtermischung wird auf die vorher durch Schleifen aufgerauhten und durch Waschen mit Aceton

gereinigten Enden von Prüfstreifen aus Anticorodal B mit den Abmessungen 170 x 25 x 1,5 mm aufgestrichen. Je zwei dieser Prüfstreifen werden mit Hilfe einer Lehre so justiert, dass sich die mit der Harz-Härtermischung bestrichenen Enden 10 mm überlappen, fixiert und nach dem Härten zur Bestimmung der Zugscherfestigkeit herangezogen.

Die Tabelle zeigt, dass bereits mit einem Zusatz von 10% des erfindungsgemässen 1,3-Diglycidyl-4,5,6,7-tetrabrombenzimidazolons selbstverlöschende Formstoffe erhalten werden. Die Glasumwandlungs- bzw. Heat-Distortion-Werte wie auch die Zugscherfestigkeitswerte steigen mit steigenden Anteilen der Bromverbindung an, die Gewichtszunahme nach Wasserlagerung bleibt praktisch gleich und die mech. Eigenschaften nehmen nur unwesentlich ab.

Tabelle 1

| | | | |
|---|---|---|---|
| Flüssiges, unmodifiziertes Epoxidharz aus Bisphenol A (Gew.T.) | 100 | 90 | 70 |
| 1,3-Diglycidyl-4,5,6,7-tetrabrombenzimidazolon (Gew.T.) | - | 10 | 30 |
| Diaminodiphenylmethan (Gew.T.) | 26,5 | 25,8 | 24 |
| Bromgehalt der Mischung (Gew.%) | - | 4,5 | 13,8 |
| Schlagbiegefestigkeit VSM 77105 ($KJ/m^2$) | 36 | 23 | 28 |
| Biegefestigkeit VSM 77103 ($N/mm^2$) | 134 | 106 | 124 |
| Durchbiegung VSM 77103 (mm) | 14 | 10 | 8,2 |
| Heat-Distortion ISO R 75 (°C)<br>Glasumwandlungstemp.(thermoplastisch (°C) | 143<br>163 | 154<br>169 | 157<br>169 |
| Zugscherfestigkeit auf Anticordal ($N/mm^2$) | 5 | 8,5 | 8,2 |
| Brennbarkeitstest (ähnlich ASTM D 635 56 T) Stufe/Brenndauer/Beurteilung | 0/15 Sek. brennbar | 1/4 Sek. selbstlöschend | 1/6 Sek. selbstlöschend |
| Gew.Zunahme n.4 Tg.Lagerung i.Wasser 25° (%) | 0,3 | 0,3 | 0,25 |
| Diel. Konstante bei 23° | 4,7 | 4,6 | 4,5 |
| Spez.Durchgangswiderstand bei 23° ($\Omega$cm) | $1,5 \cdot 10^{16}$ | $4,6 \cdot 10^{16}$ | $3,3 \cdot 10^{16}$ |
| Verlustfaktor tan $\delta$ grösser als 5% oberhalb einer Temperatur von (°C) | 187 | 172 | 180 |

Anwendungsbeispiel 4: Es wird vorgegangen wie in Beispiel 3, das dort verwendete Diaminodiphenylmethan wird jedoch in diesem Fall durch Hexahydrophthalsäureanhydrid ersetzt und noch etwas Benzyldimethylamin als Beschleuniger mitverwendet. Die Ergebnisse sind in Tabelle 2 angegeben.

Auch hier gelingt es mit einem Zusatz des erfindungsgemässen 1,3-Diglycidyl-4,5,6,7-tetrabrombenzimidazolons zu selbstlöschenden Formstoffen zu kommen. Die Formstoffe zeichnen sich wieder durch eine erhöhte Glasumwandlungstemperatur bzw. Heat-Distortion-Temperatur aus und weisen eine verringerte Gewichtszunahme nach Wasserlagerung auf.

Tabelle zu Anwendungsbeispiel 4

| | | |
|---|---|---|
| Flüssiges, unmodifiziertes Epoxidharz aus Bisphenol A (Gew.T.) | 100 | 70 |
| 1,3-Diglycidyl-4,5,6,7-tetrabrombenzimidazolon " | - | 30 |
| Hexahydrophthalsäureanhydrid "<br>Benzyldimethylamin " | 70,5<br>0,5 | 63,3<br>0,5 |
| Bromgehalt der Mischung (Gew.%) | - | 11 |
| Härtung | $4^h 80° + 6^h 120°C$ | $4^h 80° + 6^h 120°$ |
| Schlagbiegefestigkeit VSM 77105 ($KJ/m^2$) | 20 | 11 |
| Biegefestigkeit VSM 77103 ($N/mm^2$) | 137 | 80 |
| Durchbiegung VSM 77103 (mm) | 10,3 | 4,5 |
| Heat-Distortion ISO R 75 (°C)<br>Glasumwandlungstemp. (thermoanalytisch °C) | 111<br>124 | 120<br>131 |
| Brennbarkeitstest ähnlich ASTM D 635 56 T Stufe/Brenndauer Beurteilung | 0/140 Sek.<br>brennbar | 1/14 Sek.<br>selbstlöschend |
| Gew.Zunahme n.4 Tgn. Lagerung in Wasser von 25° (%) | 0,2 | 0,12 |
| Diel. Konstante bei 23° | 3,5 | 3,5 |
| Spez.Durchgangswiderstand bei 23° ($\Omega$cm) | $1,5-10^{16}$ | $1,9-10^{16}$ |
| Verlustfaktor tan $\delta$ grösser als 5% oberhalb einer Temperatur von (°C) | 126 | 129 |

Patentansprüche

1. Halogenhaltiges Benzimidazolonbisglycid der Formel

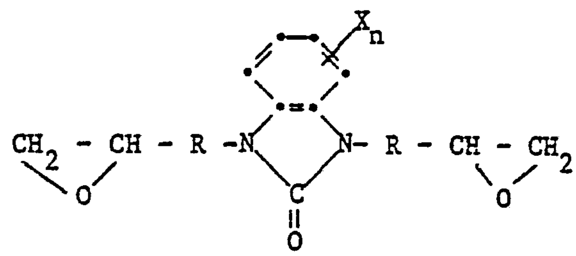

worin X für Chlor oder Brom steht, n die Zahlen 3 oder 4 bedeutet und R Methylen oder die Gruppe $CH_2$-$CH_2$-O-$CH_2$ bedeutet.

2. Bisglycide gemäss Anspruch 1, dadurch gekennzeichnet, dass n gleich 4 ist.

3. Bisglycide gemäss Anspruch 1, dadurch gekennzeichnet, dass X für Brom steht.

4. Bisglycide gemäss Anspruch 1, dadurch gekennzeichnet, dass R für Methylen steht.

5. N,N'-Bisglycidyl-4,5,6,7-tetrachlorbenzimidazolon gemäss Anspruch 1.

6. N,N'-Bisglycidyl-4,5,6,7-tetrabrombenzimidazolon gemäss Anspruch 1.

7. Härtbares Gemisch aus Polyepoxidverbindungen mit durchschnittlich mehr als einer Epoxidgruppe im Molekül, einem Härter und gegebenenfalls üblichen Zusätzen, dadurch gekennzeichnet, dass als Polyepoxidverbindung ein Benzimidazolonbisglycid gemäss Anspruch 1 enthalten ist.

8. Gemisch gemäss Anspruch 7, dadurch gekennzeichnet, dass neben einem Benzimidazolonbisglycid gemäss Anspruch 1 mindestens eine weitere Polyepoxidverbindung enthalten ist.

9. Gemisch gemäss den Ansprüchen 7 oder 8, dadurch gekennzeichnet, dass der Härter ein aromatisches Amin ist.

10. Flammwidrig ausgerüstete Formmasse, die einen duroplastischen oder thermoplastischen Kunststoff, gegebenenfalls übliche Zusätze und ein Flammschutzmittel enthält, dadurch gekennzeichnet, dass sie als Flammschutzmittel eine wirksame Menge eines halogenhaltigen Benzimidazolonbisglycides gemäss Anspruch 1 enthält.

11. Verwendung von halogenhaltigen Benzimidazolonbisglyciden gemäss Anspruch 1 als Flammschutzmittel in duroplastischen oder thermoplastischen Polymeren.

Europäisches Patentamt

# EUROPÄISCHER RECHERCHENBERICHT

0043347

Nummer der Anmeldung

EP 81 81 0258.4

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 300 010 (CIBA-GEIGY)<br>* Ansprüche 1, 8 *<br>-- | 1-4,7 | C 07 D 405/14<br>C 08 K 5/34<br>C 08 G 59/26<br>C 08 G 59/30 |
| P | EP - A1 - 0 025 018 (CIBA-GEIGY)<br>* Anspruch 1 *<br>-- | 10,11 | |
| A | DE - A - 2 300 011 (CIBA-GEIGY)<br>-- | | |
| A | DE - A1 - 2 453 326 (CIBA-GEIGY)<br>-- | | RECHERCHIERTE SACHGEBIETE (Int. Cl.³) |
| A | DE - A1 - 2 720 835 (CIBA-GEIGY)<br>---- | | C 07 D 405/14<br>C 08 G 59/00<br>C 08 K 5/34 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 23-09-1981 | FROELICH |